# EUROPÄISCHE PATENTANMELDUNG

(11) **EP 1 916 517 A1**
(43) Veröffentlichungstag der Anmeldung: **30.04.2008**
(21) Anmeldenummer: 07119150.6
(22) Anmeldetag: 24.10.2007
(51) Int. Cl.: G01N 25/72, G01N 21/88

(54) **Verfahren und Vorrichtung zur Kalibrierung und/oder Überprüfung einer Thermographieprüfung**

(30) Priorität: 27.10.2006 DE 102006050790
(71) Anmelder: MTU Aero Engines GmbH, 80995 München (DE)
(72) Erfinder: Schneider, Albert-Valentin, 80469, München (DE); Eberlein, Armin, 86836, Klosterlechfeld (DE)

(57) **Zusammenfassung**

Die vorliegende Erfindung betrifft ein Verfahren sowie eine Vorrichtung zur Kalibrierung und/oder Überprüfung einer Thermographieprüfung von zu prüfenden Bauteilen, insbesondere zur Thermographieprüfung von Bauteilen einer Gasturbine, um Fehlstellen und dgl. zu detektieren, wobei die Kalibrierung und/oder Überprüfung vor der Thermographieprüfung am Bauteil erfolgt. Das Verfahren umfasst zumindest die Schritte des Bereitstellens eines Prüfkörpers, das Einbringen von Fehlstellen einer vorbestimmten Gestalt in die Oberfläche des Prüfkörpers, das Überbeschichten der Oberfläche des Prüfkörpers mit wenigstens einer Beschichtung und das Erfassen der Fehlstellen im Prüfkörper und/oder in der Beschichtung des Prüfkörpers mittels einer Thermographiekamera. Damit wird ein Verfahren zur Kalibrierung und/oder Überprüfung einer Thermographieprüfung von zu prüfenden Bauteilen geschaffen, welches eine hohe Prozessstabilität aufweist sowie eine Bestimmung von Fehlernachweisgrenzen ermöglicht.

## Beschreibung

Die vorliegende Erfindung betrifft ein Verfahren und eine Vorrichtung zur Kalibrierung und/oder Überprüfung einer Thermographieprüfung von zu prüfenden Bauteilen, insbesondere zur Thermographieprüfung von Bauteilen einer Gasturbine, um Fehlstellen und dgl. zu detektieren, wobei die Kalibrierung und/oder Überprüfung vor der Thermographieprüfung am Bauteil erfolgt.

Bei einem zerstörungsfreien Prüfungsprozess zur thermographischen Überprüfung von Beschichtungen auf Bauteilen von Gasturbinen stellt sowohl die Prozessstabilität als auch die Ermittlung der Fehlernachweisgrenze ein wesentliches Problem dar. Schwierig ist zudem die Überprüfung verschiedener Beschichtungen, wobei auch der Grundwerkstoff selbst verschiedenartig ausgebildet sein kann. Bei einer Variation der Werkstoffe der Gasturbinenbauteile sowie einer Variation der Art der Beschichtungen sowie der Anzahl der einzelnen Schichten werden mit einer thermographischen Überprüfung verschiedene Prüfergebnisse bereitgestellt, wobei die Schwierigkeit darin besteht, dass den jeweils bereitgestellten Ergebnissen keine eindeutige Gestalt der Fehlstelle zugeordnet werden kann.

Der Prozess sollte darüber hinaus auf einfache Weise in einem automatisierten Prüfprozess integrierbar sein, welcher mit einer hohen Zuverlässigkeit und einer geringen Streuung der Ergebnisse abläuft. Derart zuverlässige Prüfverfahren zur Überprüfung und/oder zur Kalibrierung von zu prüfenden Bauteilen auf zerstörungsfreie Weise sind gemäß dem Stand der Technik nicht hinreichend bekannt. Konventionelle Prüfverfahren bedienen sich meist einer Metallographie, wobei dafür jedoch der Prüfkörper zerstört werden muss.

Ein Verfahren zur zerstörungsfreien Prüfung von Bauteilen mittels der Thermographie ist aus der Offenlegungsschrift DE 197 03 484 A1 bekannt. Das hierin offenbarte Verfahren eignet sich zur Detektion innerer Fehler in einem Material oder in einem Materialverbund, wobei im zu untersuchenden Bereich ein spezieller Wärmestrom erzeugt werden muss, der anschließend an den Fehlstellen gestört wird. Die dadurch entstehenden Verzerrungen des Oberflächentemperaturfeldes werden erfasst und zur Fehlerkonstatierung ausgewertet. Die Empfindlichkeit auf kleinere und tieferliegende innere Fehler wird durch eine optimierte Wärmeführung und durch die Nutzung von hochauflösenden Messeinrichtungen zur jeweiligen Erfassung der örtlichen und zeitlichen Oberflächentemperaturverteilung erreicht.

Jedoch eignet sich ein derartiges Verfahren, welches auf einem optimierten Oberflächentemperaturfeld basiert, nicht zur Detektion von Fehlern in Bauteilen einer Gasturbine, welche insbesondere beschichtete Leitschaufeln und die Beschichtung selbst betreffen. Ferner kann kein zuverlässiger Zusammenhang zwischen einem erzeugten Messergebnis einer Thermographieprüfung in Form eines Thermographiebildes mit der jeweiligen Gestalt der Fehlstelle hergestellt werden.

Aus der Offenlegungsschrift DE 103 56 223 A1 ist ein Verfahren, eine Vorrichtung sowie ein Probekörper zum Prüfen eines Bauteils offenbart. Das Verfahren basiert jedoch auf der Erzeugung von Ultraschallsignalen, wobei eine elektronische Spezifikation des Fehlers erzeugt wird, die ein zwei- oder dreidimensionales Punktemuster umfasst. Ferner muss ein Probekörper hergestellt werden, wobei für jeden Punkt des Punktemusters ein Mikroriss im Probekörper an der Position dieses Punktes erzeugt wird, und es müssen Ultraschallsignale aufgenommen und ausgewertet werden, welche durch die Punkte des Punktemusters im Probekörper entsprechend gekennzeichnet sind. Dieses Verfahren ist jedoch sehr aufwendig und ermöglicht keine hinreichend genaue Detektion von Fehlstellen in Bauteilen einer Gasturbine.

Bauteile von Gasturbinen wie beispielsweise Schaufeln sind oberflächenbeschichtet, wobei auch die jeweilige Beschichtung Fehlstellen aufweisen kann. Diese Fehlstellen in der Beschichtung, welche durch Oberflächenfehler des Grundmaterials entstehen können, können mittels der Ultraschallprüfung nicht zufriedenstellend detektiert werden.

Es ist daher die Aufgabe der vorliegenden Erfindung, ein Verfahren sowie eine Vorrichtung zur Kalibrierung und/oder Überprüfung einer Thermographieprüfung zu schaffen, welches die Nachteile des vorgenannten Standes der Technik vermeidet, eine hohe Prozessstabilität aufweist sowie eine Bestimmung von Fehlernachweisgrenzen ermöglicht.

Insbesondere ist es die Aufgabe der vorliegenden Erfindung, ein Verfahren und eine Vorrichtung zur Kalibrierung und/oder Überprüfung einer Thermographieprüfung von oberflächenbeschichteten Bauteilen zu schaffen. Dabei richtet sich die Thermographieprüfung insbesondere auf Fehlstellen in der Beschichtung selbst.

Diese Aufgabe wird ausgehend von einem Verfahren zur Kalibrierung und/oder Überprüfung einer Thermographieprüfung gemäß dem Oberbegriff des Anspruchs 1 sowie einer Vorrichtung hierzu gemäß dem Oberbegriff des Anspruchs 8 in Verbindung mit den jeweiligen kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren die Schritte der Bereitstellung eines Prüfkörpers, der Einbringung von Fehlstellen einer vorbestimmten Gestalt in die Oberfläche des Prüfkörpers, der Überbeschichtung der Oberfläche des Prüfkörpers mit wenigstens einer Beschichtung und des Erfassens der Fehlstellen im Prüfkörper und/oder in der Beschichtung des Prüfkörpers mittels einer Thermographiekamera umfasst.

Das Verfahren bietet den Vorteil, das der Prüfkörper zunächst aus dem gleichen Grundwerkstoff hergestellt werden kann, wie das Realbauteil einer Gasturbine wie beispielsweise eine Turbinenschaufel. Weiterhin kann auf vorteilhafte Weise in den Prüfkörper wenigstens eine Fehlstelle einer vorbestimmten Gestalt in die Oberfläche eingebracht werden. Die vorbestimmte Gestalt kann dabei dokumentiert werden, so dass die geometrische Ausbildung der Fehlstelle bekannt ist und dem weiteren Prüfverfahren zugrunde gelegt werden kann.

Nachfolgend kann die Oberfläche des Prüfkörpers mit wenigstens einer Beschichtung überbeschichtet werden. Zum Schluss des Verfahrens können die Fehlstellen im Prüfkörper und/oder in der Beschichtung des Prüfkörpers mittels einer Thermographiekamera erfasst werden. Befinden sich Fehlstellen im Prüfkörper selbst, so können diese Auswirkungen auf die wenigstens eine Beschichtung haben. Beispielsweise kann die Haftung zwischen der Fehlstelle im Prüfkörper und der Beschichtung nicht derart ausreichend sein, das die Beschichtung auf der Oberfläche der Fehlstelle selbst haften bleibt.

Bei einer Aufbringung einer weiteren Beschichtung kann die Fehlstelle in der darunter liegenden Beschichtung zumindest nicht mit einer Sichtprüfung detektiert werden. Jedoch besteht die Möglichkeit, mit dem beschriebenen Verfahren diese Fehlstelle, welche sowohl in der Oberfläche des Prüfkörpers selbst als auch in der aufgebrachten Beschichtung in Erscheinung tritt, sicher zu detektieren.

Gemäß einer vorteilhaften Ausführungsform des Verfahrens werden die Fehlstellen durch in die Oberfläche des Prüfkörpers mit eingebrachten Bohrungen und/oder Aussparungen und/oder Schlitzen erzeugt. Die eingebrachten Bohrungen und Aussparungen können unterschiedlich ausgestaltet sein, so dass beispielsweise der Bohrungsdurchmesser, die Bohrungstiefe, die Breite der Aussparung oder die Geometrie der Aussparung sowie die der Schlitze variiert und zugleich dokumentiert werden können.

Die für den Betrieb der Bauteile in der Gasturbine zulässigen und unzulässigen Fehlergrößen werden durch entsprechende Größen der Bohrungen, der Aussparungen bzw. der Schlitze im Prüfkörper abgebildet. Anschließend werden diese Bohrungen bzw. Aussparungen oder Schlitze mit der Schicht bzw. mit dem Schichtverband in der jeweiligen Schichtdicke analog des jeweiligen originalen Bauteils überbeschichtet. Hierbei bietet sich beispielsweise die Möglichkeit, den Prüfkörper mit dem O-riginalbauteil der Gasturbine in einer gemeinsamen Charge zu beschichten.

Je Spritzmedium und Schichtdicke werden für die verschiedenen Arten von Schichtfehlern und der jeweiligen zulässigen bzw. unzulässigen Fehlergrößen entsprechend Aussparungsgrößen- und formen definiert. Diese lassen sich zu diesem Zeitpunkt des Verfahrens bereits dokumentieren. Auf Grundlage der Dokumentation sind die Art und Größe der jeweiligen Fehlstellen im Prüfkörper insbesondere auch hinsichtlich ihrer Position bekannt.

Gemäß einer weiteren vorteilhaften Ausführungsform des vorliegenden Verfahrens werden die Fehlstellen mit einem Wachs und/oder einem Kunststoff oder ähnlichen Materialien ausgefüllt. Damit wird erreicht, dass die Oberfläche des Prüfkörpers eine durchgehende geometrische Gestalt aufweist, obwohl die jeweiligen Fehlstellen bereits in die Oberfläche eingebracht sind. Beim Überbeschichten der Oberfläche und damit der mit dem Wachs und/oder dem Kunststoff aufgefüllten Fehlstellen kann die Beschichtung auf den Füllmaterialien der Fehlstelle nicht so gut haften, wie auf der Oberfläche des eigentlichen Prüfkörpers. Damit können Abplatzungen, freie Beschichtungsstellen oder entsprechende Unterbrechungen der Beschichtung erzeugt werden. Die Wahl des Füllmaterials ist nicht auf die angegebenen Werkstoffe beschränkt, sondern muss lediglich eine entsprechend verschlechterte Haftung mit der Beschichtung aufweisen.

Vorteilhafterweise wird nach dem Erfassen der Fehlstellen im Prüfkörper mittels der Thermographiekamera wenigstens ein Thermographiebild bereitgestellt. In Abhängigkeit von der Größe und der Art der Fehlstelle werden Thermographiebilder mit verschiedenen Fehlstellenmerkmalen wie Bildpunkten, Kreisflächen und dgl. erzeugt, welche beispielsweise basierend auf dem Durchmesser der im Thermographiebild erscheinenden Bildpunkte auf die verschiedenen Größen der Fehlstelle hindeuten. Somit kann ein jeweiliger Bildpunkt in der Thermographieabbildung mit einer bestimmten Größe und einer bestimmten Gestalt einer Fehlstelle in der Oberfläche des Prüfkörpers in Zusammenhang gebracht werden. Die Thermographiebilder werden dabei von einer Datenverarbeitungsanlage erfasst, wobei diese mittels der Datenverarbeitungsanlage in einem Datenspeicher abgelegt werden.

Bei der Dokumentation im Datenspeicher wird das Thermographiebild der jeweiligen Erscheinungsform der Fehlstelle im Thermographiebild der jeweiligen Fehlstelle zugeordnet und mit der entsprechenden Zuordnung im Datenspeicher abgelegt. Somit wird die Möglichkeit geschaffen, bei einer späteren Thermographieprüfung am zu prüfenden Bauteil der Gasturbine das bei dieser Prüfung erzeugte Thermographiebild mit dem abgespeicherten Thermographiebild aus dem Datenspeicher zu vergleichen, um Rückschlüsse auf die Größe und die Gestalt der Fehlstelle im Gasturbinenbauteil zu ermöglichen.

Gemäß einer weiteren vorteilhaften Ausführungsform der vorliegenden Erfindung wird die Datenverarbeitungsanlage mit einem Bildverarbeitungssystem ausgestattet, mittels dessen eine automatische Fehlerdokumentation und/oder eine nachfolgende Fehlerbewertung vorgenommen wird. Beispielsweise kann bei der Thermographieprüfung am tatsächlichen Gasturbinenbauteil als angezeigte Größe des Messergebnisses die Art, die Form, die Größe und die genaue Position der Fehlstelle als Ergebnis ausgegeben werden, indem ein Vergleich mit den in dem Datenspeicher abgelegten Thermographiebildern automatisch erfolgt. Die Fehlstelle kann beispielsweise in einer Beschichtung vorhanden sein, welche nicht die letzte Oberflächenschicht bildet, sondern eine separate Beschichtung einer Mehrzahl von verschiedenen Beschichtungen bildet. Somit ist zwar eine visuelle Prüfung nicht möglich, wobei jedoch mittels einer Thermographieprüfung die genaue Ausgestaltung der Fehlstelle detektiert werden kann.

Zur Durchführung des erfindungsgemäßen Verfahrens wird vorgeschlagen, eine Vorrichtung zur Kalibrierung und/oder Überprüfung einer Thermographieprüfung von zu prüfenden Bauteilen mit einer Thermographiekameraeinrichtung vorzusehen, um Fehlstellen und dgl. zu detektieren. Dabei wird ein Prüfkörper bereitgestellt, in dessen Oberfläche Fehlstellen einer vorbestimmten Gestalt eingebracht sind, wobei die Oberfläche mittels wenigstens einer Beschichtung überbeschichtet ist und die Fehlstellen mittels einer Thermographiekameraeinrichtung detektierbar sind.

Die vorliegende Erfindung richtet sich ferner auf einen Prüfkörper zur Kalibrierung und/oder zur Überprüfung einer Thermographieprüfung von zu prüfenden Bauteilen, insbesondere der Thermographieprüfung der Bauteile einer Gasturbine, um Fehlstellen und dergleichen zu detektieren. Die Kalibrierung und/oder die Überprüfung wird dabei vor der eigentlichen Thermographieprüfung am Bauteil der Gasturbine selbst vorgenommen.

Dieser Prüfkörper weist Fehlstellen in der Oberfläche auf, wobei die Oberfläche mittels wenigstens einer Beschichtung überbeschichtet ist. Die Fehlstellen in der Oberfläche des Prüfkörpers weisen eingebrachte Bohrungen und/oder Aussparungen und/oder Schlitze auf, wobei diese mit einem Wachs und/oder mit einem Kunststoff oder dergleichen ausgefüllt sind. Damit bilden diese Füllmaterialien einen schlechten Haftgrund für die nachfolgende Überbeschichtung, so dass Teile der Beschichtung abplatzen können oder sich erst gar nicht auf der Oberfläche der Fehlstellen niederschlagen können.

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt.

Es zeigt:
- Figur 1: ein Ablaufdiagramm des Verfahrens gemäß der vorliegenden Erfindung;
- Figur 2: eine schematische Darstellung des Prüfkörpers mit eingebrachten Fehlstellen sowie einer Thermographiekamera, einer Datenverarbeitungsanlage sowie einem Datenspeicher; und
- Figur 3: die Anordnung gemäß Figur 2, wobei die Thermographieprüfung an einer Turbinenschaufel einer Gasturbine selbst vorgenommen wird.

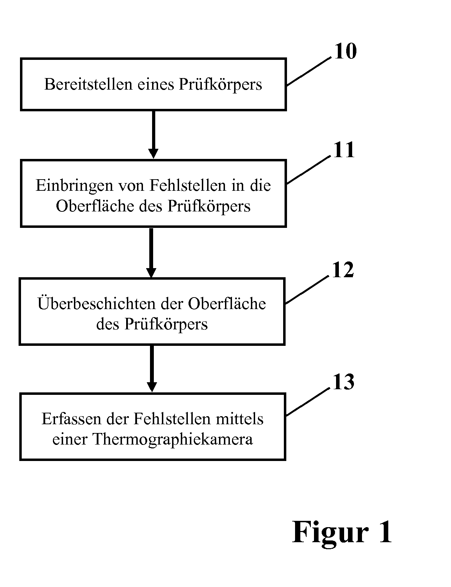

Das in der Figur 1 beschriebene Verfahren zur Kalibrierung und/oder Überprüfung einer Thermographieprüfung weist vier Verfahrensschritte 10 bis 13 auf. Im ersten Verfahrensschritt 10 wird ein Prüfkörper bereitgestellt. Dieser kann aus dem gleichen Materialien bestehen, wie das Bauteil der Gasturbine, welches im eigentlichen Prüfverfahren mittels der Thermographieprüfung auf Fehlstellen hin untersucht werden soll.

Der zweite Verfahrensschritt 11 umfasst das Einbringen von Fehlstellen in die Oberfläche des Prüfkörpers. Dieses Einbringen von Fehlstellen kann das Anbohren, das Anbringen von Aussparungen und/oder von Schlitzen in die Oberfläche des Prüfkörpers umfassen. Ferner können die eingebrachten Fehlstellen mit einem Wachs und/oder einem Kunststoff aufgefüllt werden, um eine gleichförmige Oberfläche des Prüfkörpers zu schaffen.

Im dritten Verfahrensschritt 12 wird die Oberfläche des Prüfkörpers mit den eingebrachten Fehlstellen überbeschichtet. Das Überbeschichten kann in mehreren Beschichtungsschritten erfolgen, so dass nicht nur eine Beschichtung, sondern eine Mehrzahl von Beschichtungen auf die Oberfläche des Prüfkörpers aufgebracht wird. Die Beschichtungen können beispielsweise Wärmeschutzschichten, Verschleißschutzschichten, Korrosionsschutzschichten oder dergleichen umfassen und verschiedene Dicken und Materialausbildungen aufweisen.

In einem vierten Verfahrensschritt 13 werden die Fehlstellen in der Oberfläche des Prüfkörpers mittels einer Thermographiekamera erfasst. Die Thermographiekamera detektiert dabei ein Wärmebild innerhalb des Prüfkörpers, welches an den Fehlstellen selbst eine gewisse Unregelmäßigkeit aufweist, welche auf die Fehlstelle hindeutet. Mittels der Thermographiekamera werden Thermographiebilder an eine Datenverarbeitungsanlage ausgegeben, so dass die Thermographiebilder entsprechend ausgewertet und abgespeichert werden können.

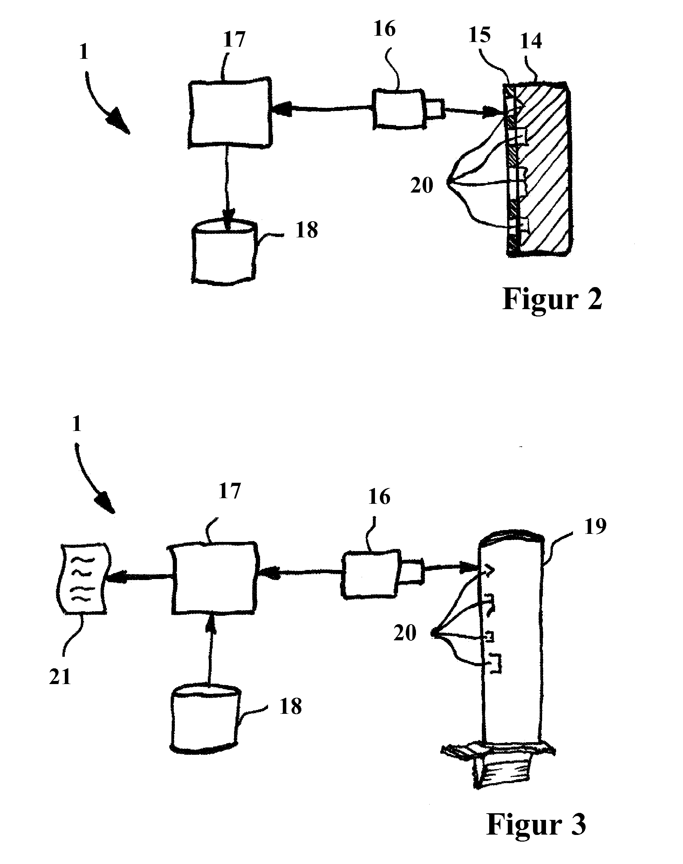

Figur 2 zeigt eine schematische Darstellung der Vorrichtung zur Kalibrierung und/oder Überprüfung einer Thermographieprüfung. Die Vorrichtung ist mit dem Bezugszeichen 1 versehen und umfasst zunächst einen Prüfkörper 14, welcher mehrere Fehlstellen 20 aufweist. Die Fehlstellen 20 werden mit einer Beschichtung 15 überbeschichtet, wobei die Beschichtung 15 an den Fehlstellen 20 selbst auch Unregelmäßigkeiten aufweist, welche als freie Bereiche dargestellt sind.

Mittels einer Thermographiekameraeinrichtung 16 werden die Fehlstellen 20 bzw. die Unregelmäßigkeiten in der Beschichtung 15 detektiert und an eine Datenverarbeitungsanlage 17 übermittelt. Die Thermographiekameraeinrichtung 16 übermittelt dabei Thermographiebilder an die Datenverarbeitungsanlage 17, welche an einen Datenspeicher 18 abgegeben und von diesem abgespeichert werden. Daher ist zwischen der Datenverarbeitungsanlage 17 und dem Datenspeicher 18 ein Pfeil dargestellt, welcher das Abspeichern der Thermographiebilder in den Datenspeicher 18 andeutet.

Figur 3 zeigt eine schematische Ansicht der Vorrichtung 1 gemäß Figur 2, wobei die Vorrichtung nunmehr Fehlstellen 20 an einer Turbinenschaufel 19 selbst detektiert. Die Thermographiekameraeinrichtung 16 wird daher nunmehr zur Detektion der Fehlstellen 20 in der Turbinenschaufel 19 verwendet, und übermittelt wiederum die Thermographiebilder an die Datenverarbeitungsanlage 17. Diese vergleicht die innerhalb der Turbinenschaufel gemessenen Fehlstellen 20 bzw. die damit erzeugten Thermographiebilder mit den im Datenspeicher 18 abgespeicherten Thermographiebildern. Daher werden diese zunächst vom Datenspeicher 18 an die Datenverarbeitungsanlage 17 übergeben, welches durch einen Pfeil zwischen dem Datenspeicher 18 und der Datenverarbeitungsanlage 17 in Richtung der Datenverarbeitungsanlage 17 angedeutet ist.

In Abhängigkeit von der Übereinstimmung der entsprechenden Thermographiebilder, welche im Datenspeicher 18 abgespeichert sind, und der mittels der tatsächlich an der Turbinenschaufel 19 gemessenen Fehlstellen 20 kann durch die Datenverarbeitungsanlage 17 eine Information bereitgestellt werden, welche Größe oder welche Gestalt die Fehlstellen 20 in der Turbinenschaufel 19 tatsächlich aufweisen, indem diese Thermographiebilder mit den abgespeicherten Thermographiebildern aus der Thermographie des Prüfkörpers 14 (siehe Figur 2) verglichen werden. Als Ergebnis wird mittels der Datenverarbeitungsanlage 17 ein Ergebnisprotokoll 21 bereitgestellt, welche Informationen über die Fehlstellen 20 in der Turbinenschaufel 19 hinsichtlich ihrer Größe und Gestalt umfasst.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Vorrichtung
- **10**: erster Verfahrensschritt
- **11**: zweiter Verfahrensschritt
- **12**: dritter Verfahrensschritt
- **13**: vierter Verfahrensschritt
- **14**: Prüfkörper
- **15**: Beschichtung
- **16**: Thermographiekameraeinrichtung
- **17**: Datenverarbeitungsanlage
- **18**: Datenspeicher
- **19**: Turbinenschaufel
- **20**: Fehlstelle
- **21**: Ergebnisprotokoll

## Patentansprüche

1. Verfahren zur Kalibrierung und/oder Überprüfung einer Thermographieprüfung von zu prüfenden Bauteilen, insbesondere zur Thermographieprüfung von Bauteilen einer Gasturbine, um Fehlstellen (20) zu detektieren, wobei die Kalibrierung und/oder Überprüfung vor der Thermographieprüfung am Bauteil erfolgt, und wobei das Verfahren zumindest die folgenden Schritte umfasst:
- Bereitstellen eines Prüfkörpers (14);
- Einbringen von Fehlstellen (20) einer vorbestimmten Gestalt in die Oberfläche des Prüfkörpers (14);
- Überbeschichten der Oberfläche des Prüfkörpers (14) mit wenigstens einer Beschichtung (15); und
- Erfassen der Fehlstellen (20) im Prüfkörper (14) und/oder in der Beschichtung (15) des Prüfkörpers (14) mittels einer Thermographiekamera.

2. Verfahren nach Anspruch 1,
**dadurch gekennzeichnet, dass** die Fehlstellen (20) durch in die Oberfläche des Prüfkörpers (14) eingebrachte Bohrungen und/oder Aussparungen und/oder Schlitze erzeugt werden.

3. Verfahren nach Anspruch 1 oder 2,
**dadurch gekennzeichnet, dass** die Fehlstellen (20) mit einem Wachs und/oder einem Kunststoff aufgefüllt werden.

4. Verfahren nach Anspruch 1 bis 3,
**dadurch gekennzeichnet, dass** nach dem Erfassen der Fehlstellen (20) im Prüfkörper (14) mittels der Thermographiekamera wenigstens ein Thermographiebild bereitgestellt wird.

5. Verfahren nach Anspruch 4,
**dadurch gekennzeichnet, dass** das wenigstens eine Thermographiebild mittels einer Datenverarbeitungsanlage (17) erfasst wird.

6. Verfahren nach Anspruch 5,
**dadurch gekennzeichnet, dass** das Thermographiebild mittels der Datenverarbeitungsanlage (17) in einem Datenspeicher (18) abgespeichert wird, wobei dieses der vorbestimmten Gestalt der Fehlstelle (20) zugeordnet wird.

7. Verfahren nach Anspruch 4 oder 5,
**dadurch gekennzeichnet, dass** die Datenverarbeitungsanlage (17) ein Bildverarbeitungssystem umfasst, mittels dessen eine automatische Fehlerdokumentation und/oder eine nachfolgende Fehlerbewertung vorgenommen wird.

8. Vorrichtung (1) zur Kalibrierung und/oder Überprüfung einer Thermographieprüfung von zu prüfenden Bauteilen mit einer Thermographiekameraeinrichtung, insbesondere zur Thermographieprüfung von Bauteilen einer Gasturbine, um Fehlstellen (20) und dgl. zu detektieren, **dadurch gekennzeichnet, dass** ein Prüfkörper (14) vorgesehen ist, in dessen Oberfläche Fehlstellen (20) einer vorbestimmten Gestalt eingebracht sind, wobei die Oberfläche mittels wenigstens einer Beschichtung (15) überbeschichtet ist und die Fehlstellen (20) mittels einer Thermographiekameraeinrichtung detektierbar sind.

9. Vorrichtung (1) nach Anspruch 8,
**dadurch gekennzeichnet, dass** die Thermographiekameraeinrichtung mit einer Datenverarbeitungsanlage (17) in Verbindung gebracht ist, an welche Thermographiebilder übermittelbar sind.

10. Vorrichtung (1) nach Anspruch 8 oder 9,
**dadurch gekennzeichnet, dass** mit einer Datenverarbeitungsanlage (17) ein Datenspeicher (18) in Verbindung gebracht ist, in welchem die Thermographiebilder abspeicherbar sind.

11. Prüfkörper (14) zur Kalibrierung und/oder Überprüfung einer Thermographieprüfung von zu prüfenden Bauteilen, insbesondere zur Thermographieprüfung von Bauteilen einer Gasturbine, um Fehlstellen (20) zu detektieren, wobei die Kalibrierung und/oder Überprüfung vor der Thermographieprüfung am Bauteil erfolgt,
**dadurch gekennzeichnet, dass** in die Oberfläche des Prüfkörpers (14) Fehlstellen (20) eingebracht sind, wobei die Oberfläche mittels wenigstens einer Beschichtung (15) überbeschichtet ist.

12. Prüfkörper (14) nach Anspruch 11,
**dadurch gekennzeichnet, dass** die Fehlstellen (20) in die Oberfläche des Prüfkörpers (14) eingebrachte Bohrungen und/oder Aussparungen und/oder Schlitze aufweisen.

13. Prüfkörper (14) nach Anspruch 11 oder 12,
**dadurch gekennzeichnet, dass** die Fehlstellen (20) mit einem Wachs und/oder mit einem Kunststoff aufgefüllt sind.
